# EUROPÄISCHE PATENTANMELDUNG

(11) **EP 0 848 224 A2**
(43) Veröffentlichungstag der Anmeldung: **17.06.1998**
(21) Anmeldenummer: 97120254.4
(22) Anmeldetag: 19.11.1997
(51) Int. Cl.: F28C 1/12

(54) **Zwangsbelüfteter Kühlturm sowie Verfahren zum Betrieb eines solchen Kühlturms**

(30) Priorität: 13.12.1996 DE 19651848
(71) Anmelder: Balcke-Dürr GmbH, 40882 Ratingen (DE)
(72) Erfinder: Tesche, Walter, Dipl.-Ing., 40882 Mettmann (DE)
(74) Vertreter: Stenger, Watzke & Ring Patentanwälte

(57) **Zusammenfassung**

Die Erfindung betrifft einen zwangsbelüfteten Kühlturm mit innerhalb eines Kühlturmmantels (2) angeordneten, von der abzukühlenden Flüssigkeit, insbesondere Wasser, ausgehend von einer im wesentlichen horizontalen Flüssigkeitsverteilleitung (4) von oben nach unten durchströmten Rieseleinbauelementen (3) sowie mit einem Ventilator (6) zur Förderung des wärmeaufnehmenden Mediums, insbesondere Umgebungsluft, im Gegenstrom und/oder Kreuzstrom zu der abzukühlenden Flüssigkeit. Um einen solchen Kühlturm (1) ohne die Gefahr von Vereisungen auch dann betreiben zu können, wenn die Temperatur der Kühlluft unterhalb des Gefrierpunktes liegt, ist mindestens eine zweite Flüssigkeitsverteilleitung (4) mit Abstand zu der ersten Flüssigkeitsverteilleitung (4) unterhalb dieser Flüssigkeitsverteilleitung (4) angeordnet.

## Beschreibung

Die Erfindung betrifft einen zwangsbelüfteten Kühlturm mit innerhalb des Kühlturmmantels angeordneten, von der abzukühlenden Flüssigkeit, insbesondere Wasser, ausgehend von einer im wesentlichen horizontalen Flüssigkeitverteilleitung von oben nach unten durchströmten Rieseleinbauelementen sowie mit mindestens einem Ventilator zur Förderung des wärmeaufnehmenden Mediums, insbesondere Umgebungsluft, im Gegenstrom und/oder Kreuzstrom zu der abzukühlenden Flüssigkeit. Die Erfindung betrifft weiterhin ein Verfahren zum Betrieb eines zwangsbelüfteten Kühlturms.

Solche zwangsbelüfteten Kühltürme, bei denen abzukühlendes Wasser und die die Wärme aufnehmende Umgebungsluft im Kreuz- und/oder Gegenstrom zueinander geleitetet werden, sind aus der Praxis in verschiedenen Ausführungsformen seit langer Zeit bekannt. Bei diesen Kühlturmtypen ist die Endtemperatur des abzukühlenden Wassers abhängig von der Trocken- und Feuchtlufttemperatur der zum Wärmeaustausch verwendeten Umgebungsluft; bei fallender Außenlufttemperatur sinkt demzufolge auch die Endtemperatur des abzukühlenden Wassers. Daraus ergibt sich das Problem, daß bei Temperaturen der Außenluft unterhalb des Gefrierpunktes die Temperatur des abzukühlenden Wassers so stark absinkt, daß sich im Kühlturm Eis bildet. Diese Eisbildung im Kühlturm kann zu großen Schäden am Kühlturm und den Rieseleinbauelementen führen.

Um dieser Gefahr der Vereisung des Kühlturms entgegenzuwirken, sind aus der Praxis verschiedene Verfahren zum Betrieb zwangsbelüfteter Kühltürme bekannt.

Da die Kühlleistung eines Kühlturms von dem durch den Ventilator erzeugten Luftdurchsatz durch den Kühlturm abhängig ist, besteht bei einem ersten Verfahren zur Verhinderung der Vereisung die Möglichkeit, die Ventilatordrehzahl zu reduzieren. Aufgrund der Proportionalität zwischen Ventilatordrehzahl und Luftdurchsatz steigt die Endtemperatur des abzukühlenden Wassers bei reduzierter Ventilatordrehzahl. Infolge der höheren Endtemperatur des abzukühlenden Wassers stellt sich jedoch ein Abluftzustand der Kühlluft ein, der im Vergleich zur Nenndrehzahl des Ventilators wesentlich wärmer und mit mehr Feuchtigkeit angereichert ist. Bei Naßkühltürmen führt diese drehzahlreduzierte Betriebsweise zu deutlich intensiveren Schwadenentwicklungen, als dies im Normalbetrieb der Fall ist. Insbesondere bei den für schwadenfreien Betrieb konzipierten Hybrid-Zellenkühltürmen führt die Drehzahlreduzierung zu einer deutlichen, dem Einsatzzwecke dieser Hybrid-Zellenkühltürme widersprechenden Schwadenentwicklung.

Eine ähnliche Wirkung wie die Reduzierung der Ventilatordrehzahl kann durch die Versperrung des Lufteintrittes durch Drosselorgane, wie beispielsweise höheneinstellbare Rolltore oder Jalousieklappen, erreicht werden. Auch bei dieser Betriebsweise führt die Verhinderung der Vereisung zu der voranstehend beschriebenen unerwünschten starken Schwadenentwicklung.

Weiterhin ist es bekannt, einen Teil des abzukühlenden Wassers über eine Bypassleitung an der Kühlluft vorbei direkt in das Sammelbecken zu leiten. Gleichzeitig mit dieser Bypassschaltung wird ein entsprechender Teil des Kühleinbaus des Kühlturms hydraulisch abgesperrt, um die Beregnung pro Flächeneinheit, die sogenannte Regendichte, konstant zu halten. Die Folge dieser Betriebsweise ist eine ungleiche Luftverteilung innerhalb des Kühlturms, da durch den hydraulisch abgesperrten Kühleinbau kalte Umgebungsluft strömt, während der Luftdurchsatz durch den beregneten Teil reduziert wird. Nachteilig bei dieser Variante ist, daß die hydraulische Abschaltung und Trennung des beregneten vom unberegneten Kühleinbau absolut wasserdicht sein muß, da selbst leichte Leckagen zu sofortigen Vereisungen führen. Darüber hinaus ergeben sich bei Hybrid-Kühltürmen hinter dem beregneten Teil wieder Abluftzustände, die zu einer starken Schwadenbildung führen können. Insgesamt gesehen ist diese Betriebsweise einerseits aufgrund der Schwadenentwicklung ungünstig und andererseits deshalb nachteilig, weil die Wassertemperatur im beregneten Teil weiterhin im Vereisungsbereich liegen kann.

Schließlich ist es gemäß einer weiteren Betriebsweise von Kühltürmen bekannt, einen Teilstrom des warmen, abzukühlenden Wassers aus dem Wasserzulauf zu entnehmen und in eine sogenannte Winterrinne zu leiten. Mit diesem abgezweigten Teilstrom wird ein Wasserschleier am Lufteintritt des Kühlturms erzeugt, der einerseits einen zusätzlichen Druckverlust und andererseits eine geringe Erwärmung der Kühlluft bewirkt. Zur Aufrechterhaltung der intensiven Beregnung des Kühleinbaus muß jedoch auch bei dieser Betriebsweise ein Teil des Kühleinbaus hydraulisch abgeschaltet werden. Diese Betriebsvariante, die sich bei Naturzugkühltürmen durchaus bewährt hat, ist jedoch für zwangsbelüftete Kühltürme nicht geeignet, da der mit dem Wasserschleier erzeugte Zusatzdruckverlust sehr klein ist und sich nur eine geringe Verschiebung des Luftdurchsatzes und somit keine deutliche Anhebung der Endtemperatur des abzukühlenden Wassers ergibt, wenn die nachteilige Schwadenentwicklung in der Abluft vermieden werden soll.

Davon ausgehend liegt der Erfindung die **Aufgabe** zugrunde, einen zwangsbelüfteten Kühlturm der eingangs genannten Art derart weiterzuentwickeln, daß dieser auch bei unter dem Gefrierpunkt liegenden Temperaturen der Kühlluft ohne Beeinflussung des Mengenverhältnisses der Kühlluft zur abzukühlenden Flüssigkeit eisfrei zu betreiben ist.

Vorrichtungsmäßig ist die **Lösung** dieser Aufgabe dadurch gekennzeichnet, daß mindestens eine zweite Flüssigkeitsverteilleitung mit Abstand zu der ersten Flüssigkeitsverteilleitung unterhalb dieser ersten Flüssigkeitsverteilleitung angeordnet ist.

Ein solchermaßen ausgebildeter Kühlturm macht sich zunutze, daß die Kühlleistung eines zwangsbelüfteten Kühlturms neben dem Mengenverhältnis zwischen Kühlluft und abzukühlender Flüssigkeit, der sogenannen λ-Zahl, vom Wärme- und Stoffübergang und somit von der Intensität des Kontakts zwischen Kühlluft und abzukühlender Flüssigkeit abhängt. Der durch die dimensionslose Kennzahl Kv gekennzeichnete Wärme- und Stoffübergang wird maßgeblich durch die Rieseleinbauelemente innerhalb des Kühlturmmantels sowie die Einbauhöhe, also die Länge der Wärme- und Stoffaustauschstrecke beeinflußt. Dies heißt, je höher der Kühlturm mit Rieseleinbauelementen gepackt ist, um so größer ist die Kv-Zahl und um so niedriger ist die Endtemperatur der abzukühlenden Flüssigkeit. Im Umkehrschluß läßt sich durch Verringerung der Kv-Zahl, also durch Verringerung des Kontaktes zwischen Kühlluft und abzukühlender Flüssigkeit, die Endtemperatur der abzukühlenden Flüssigkeit beeinflussen. Durch die Verlagerung der Flüssigkeitsaufgabe auf eine zweite Flüssigkeitsverteilleitung, die mit Abstand unterhalb der ersten Flüssigkeitsverteilleitung angeordnet ist, wird die Länge der Austauschstrecke verkürzt und somit die Kontaktzeit zwischen Kühlluft und abzukühlender Flüssigkeit verkürzt, so daß die Kv-Zahl kleiner wird und somit die Endtemperatur der abzukühlenden Flüssigkeit steigt.

Gemäß einer bevorzugten Ausführungsform der Erfindung ist es möglich, die abzukühlende Flüssigkeit in Abhängigkeit von der Temperatur des wärmeaufnehmenden Mediums auf eine oder mehrere Flüssigkeitsverteilleitungen aufzuteilen ist. Auf diese Weise ist es möglich, eine individuelle Anpassung der Endtemperatur der abzukühlenden Flüssigkeit an die jeweilige Temperatur der zur Kühlung verwendeten Umgebungsluft anzupassen.

Um auch bei besonders niedrigen Temperaturen des wärmeaufnehmenden Mediums einen eisfreien Betrieb des Kühlturms gewährleisten zu können, wird erfindungsgemäß vorgeschlagen, daß mindestens eine der unterhalb der ersten Flüssigkeitsverteilleitung angeordneten Flüssigkeitsverteilleitungen unterhalb der Rieseleinbauelemente angeordnet ist. Durch die Umgehung der Rieseleinbauelemente wird die Kontaktzeit zwischen Kühlluft und abzukühlender Flüssigkeit deutlich reduziert, was eine höhere Endtemperatur der abzukühlenden Flüssigkeit zur Folge hat.

Eine besonders gute Verteilung der abzukühlenden Flüssigkeit innerhalb des Kühlturms wird erfindungsgemäß dadurch erreicht, daß die Flüssigkeitsverteilleitungen mit Sprühdüsen versehen sind.

Die verfahrensmäßige **Lösung** der Aufgabe ist dadurch gekennzeichnet, daß die abzukühlende Flüssigkeit über mindestens eine zweite Flüssigkeitsverteilleitung verteilt wird, die im Abstand zu der ersten Flüssigkeitsverteilleitung unterhalb dieser Flüssigkeitsverteilleitung angeordnet ist.

Eine individuelle Anpassung der Endtemperatur der abzukühlenden Flüssigkeit an die Temperatur des wärmeaufnehmenden Mediums kann erfindungsgemäß dadurch erreicht werden, daß die Temperatur des wärmeaufnehmenden Mediums gemessen und in Abhängigkeit von dieser Temperatur die abzukühlende Flüssigkeit auf eine oder mehrere der untereinander angeordneten Flüssigkeitsverteilleitungen aufgeteilt wird.

Schließlich wird mit der Erfindung vorgeschlagen, daß die Verteilung der abzukühlenden Flüssigkeit auf die verschiedenen Flüssigkeitsverteilleitungen derart erfolgt, daß eine um so tiefere Flüssigkeitsverteilleitung mit der abzukühlenden Flüssigkeit beaufschlagt wird, je tiefer die Temperatur des wärmeaufnehmenden Mediums ist.

Weitere Merkmale und Vorteile der Erfindung ergeben sich aus der nachfolgenden Beschreibung der zugehörigen Zeichnung, in der zwei Ausführungsbeispiele eines erfindungsgemäß ausgestalteten Kühlturms dargestellt sind. In den Zeichnungen zeigt:
- Fig. 1: einen schematischen Längsschnitt durch einen zwangsbelüfteten Kühlturm gemäß einer ersten Ausführungsform;
- Fig. 2a: einen vergrößerten Ausschnitt der in Fig. 1 dargestellten Ausführungsform bei Normalbetrieb;
- Fig. 2b: die in Fig. 2a dargestellte Ausführungsform beim Winterbetrieb und
- Fig. 3: eine zweite Ausführungsform im Winterbetrieb gemäß der Ansicht in Fig. 2b.

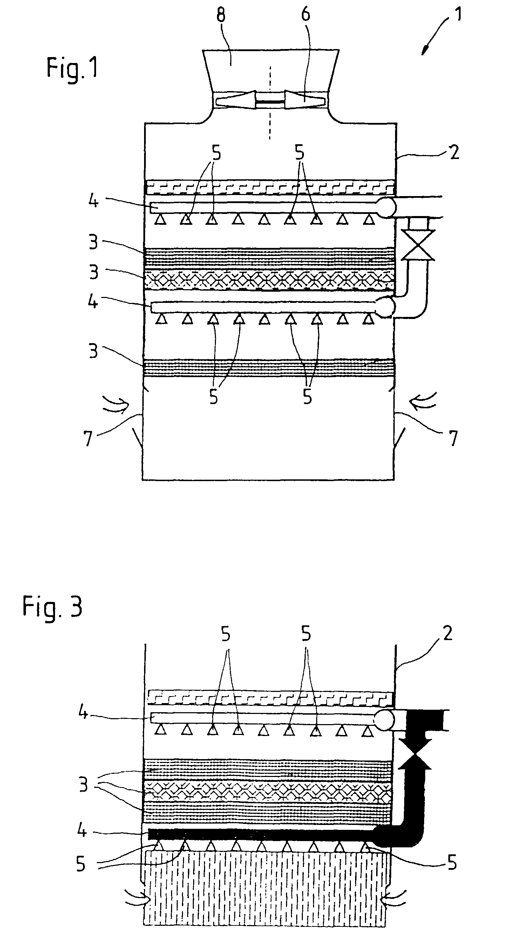

Fig. 1 zeigt einen schematischen Längsschnitt durch einen zwangsbelüfteten Kühlturm 1. Innerhalb eines die Außenhülle des Kühlturms 1 bildenden Kühlturmmantels 2 sind Rieseleinbauelemente 3 angeordnet, die dazu dienen, die für den Wärme- und Stoffaustausch zur Verfügung stehende Oberfläche der abzukühlenden Flüssigkeit zu vergrößern und die Kontaktzeit zwischen der Kühlluft und der abzukühlenden Flüssigkeit zu vergrößern. Die abzukühlende Flüssigkeit wird über horizontale Flüssigkeitsverteilleitungen 4 dem Kühlturm 1 zugeführt und über an den Flüssigkeitsverteilleitungen 4 angeordnete Düsen 5 im Inneren des Kühlturms 1 versprüht. Als wärmeaufnehmendes Medium zur Abkühlung der über die Düsen 5 versprühten Flüssigkeit dient Umgebungsluft, die über einen innerhalb des Kühlturms 1 angeordneten Ventilator 6 angesaugt und im Gegenstrom zu der abzukühlenden Flüssigkeit durch das Innere des Kühlturms gesaugt wird.

Wie aus Fig. 1 ersichtlich, tritt die durch den Ventilator 6 angesaugte Umgebungsluft durch unterhalb der Rieseleinbauelemente 3 angeordnete Lufteintritte 7 in den Kühlturm 1 ein und durchströmt die innerhalb des Kühlturms 1 angeordneten Rieseleinbauelemente 3 von unten nach oben, bis die Luft über den Luftaustritt 8 aus den Kühlturm 1 wieder hinaustritt.

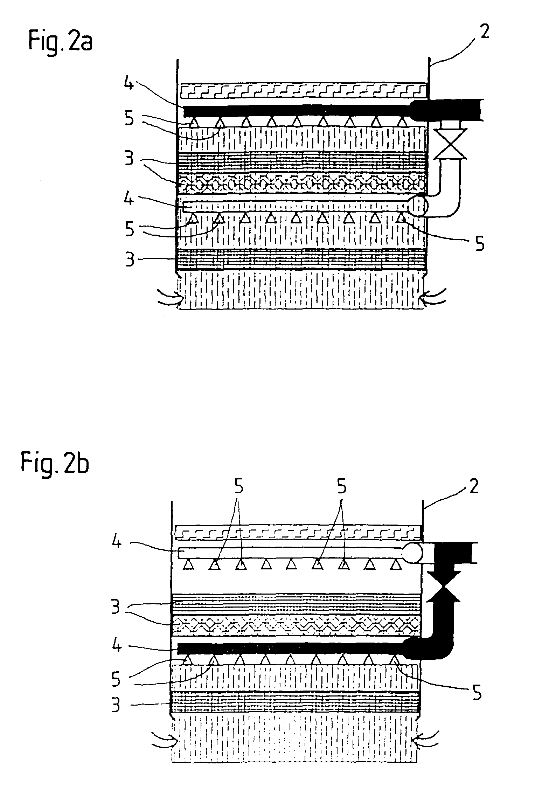

Fig. 2a zeigt einen die Rieseleinbauelemente 3 sowie die Flüssigkeitsverteilleitungen 4 umfassenden Ausschnitt der Darstellung gemäß Fig. 1. Bei der in Fig. 2a und 2b dargestellten ersten Ausführungsform sind zwei Flüssigkeitsverteilleitungen 4 übereinander so angeordnet, daß die oberste Flüssigkeitsverteilleitung 4 oberhalb der Rieseleinbauelemente 3 und die untere Flüssigkeitsverteilleitung 4 zwischen den Rieseleinbauelementen 3 angeordnet ist.

Bei dem in Fig. 2a dargestellten Normalbetrieb erfolgt die Aufgabe der abzukühlenden Flüssigkeit über die obere, oberhalb der Rieseleinbauelemente 3 angeordnete Flüssigkeitsverteilleitung 4. Diese Schaltungsvariante wird verwendet, wenn die Temperatur des wärmeaufnehmenden Mediums der Umgebungsluft einen deutlichen Abstand vom Gefrierpunkt hat. Bei dieser Betriebsart steht der abzukühlenden Flüssigkeit die volle Einbauhöhe der Rieseleinbauelemente 3 innerhalb des Kühlturmes 1 zur Verfügung, um im Gegenstrom mit der Kühlluft den gewünschten Wärme- und Stoffübergang durchzuführen.

Da bei Temperaturen um oder unterhalb des Gefrierpunktes die Gefahr besteht, daß der Kühlturm 1 vereist, wird bei dem in Fig. 2b dargestellten Winterbetrieb des Kühlturms 1 die Austauschstrecke für den Wärme- und Stoffübergang zwischen Kühlluft und abzukühlender Flüssigkeit dadurch reduziert, daß die abzukühlende Flüssigkeit über die tiefer gelegene Flüssigkeitsverteilleitung 4 im Kühlturm 1 versprüht wird.

Je nach Temperatur der Kühlluft ist es auch möglich, die abzukühlende Flüssigkeit über beide Flüssigkeitsverteilleitungen zu versprühen.

Die in Fig. 3 dargestellte zweite Ausführungsform unterscheidet sich von der in den Abb. Fig. 1 bis 2b dargestellten Ausführungsformen dadurch, daß die tiefer gelegene zweite Flüssigkeitsverteilleitung 4 unterhalb der Rieseleinbauelemente 3 angeordnet ist. Bei dieser Schaltungsvariante erfolgt keine zusätzliche mechanische Verteilung des Flüssigkeitsfilms der abzukühlenden Flüssigkeit. Der Wärme- und Stoffaustausch erfolgt hierbei ausschließlich zwischen der durch den Ventilator 6 nach oben gesaugten Kühlluft und dem aus den Düsen 5 versprühten Flüssigkeitsfilm.

Ein solchermaßen ausgestalteter Kühlturm 1 ermöglicht selbst bei Temperaturen der Umgebungsluft unterhalb des Gefrierpunkts einen vereisungsfreien Betrieb des Kühlturms 1, ohne daß die Ventilatorleistung oder die Flüssigkeitszufuhr reduziert werden müssen.

Durch die Anordnung von mindestens zwei im Abstand zueinander untereinander angeordneten Flüssigkeitsverteilleitungen 4 ist es möglich, die Austauschstrecke für den Wärme- und Stoffübergang zwischen Kühlluft und abzukühlender Flüssigkeit zu reduzieren und so an die Temperatur der Kühlluft anzupassen. Je niedriger die Temperatur der Kühlluft ist, um so kürzer ist die Austauschstrecke zu wählen, das heißt, eine um so tiefere Flüssigkeitsverteilleitung 4 ist für die Aufgabe der abzukühlenden Flüssigkeit auszuwählen. Durch die Aufteilung auf zwei oder mehrere Flüssigkeitsverteilleitungen 4 ist es somit möglich, die Endtemperatur der abzukühlenden Flüssigkeit individuell auf die Temperatur der Kühlluft einzustellen.

### Bezugszeichenliste

- 1: Kühlturm
- 2: Kühlturmmantel
- 3: Rieseleinbauelement
- 4: Flüssigkeitsverteilleitung
- 5: Düse
- 6: Ventilator
- 7: Lufteintritt
- 8: Luftaustritt

## Patentansprüche

1. Zwangsbelüfteter Kühlturm mit innerhalb eines Kühlturmmantels (2) angeordneten, von der abzukühlenden Flüssigkeit, insbesondere Wasser, ausgehend von einer im wesentlichen horizontalen Flüssigkeitsverteilleitung (4) von oben nach unten durchströmten Rieseleinbauelementen (3) sowie mit einem Ventilator (6) zur Förderung des wärmeaufnehmenden Mediums, insbesondere Umgebungsluft, im Gegenstrom und/oder Kreuzstrom zu der abzukühlenden Flüssigkeit,
**dadurch gekennzeichnet,**
daß mindestens eine zweite Flüssigkeitsverteilleitung (4) mit Abstand zu der ersten Flüssigkeitsverteilleitung (4) unterhalb dieser ersten Flüssigkeitsverteilleitung (4) angeordnet ist.

2. Zwangsbelüfteter Kühlturm nach Anspruch 1, dadurch gekennzeichnet, daß die abzukühlende Flüssigkeit in Abhängigkeit von der Temperatur des wärmeaufnehmenden Mediums auf eine oder mehrere Flüssigkeitsverteilleitungen (4) aufteilbar ist.

3. Zwangsbelüfteter Kühlturm nach Anspruch 1 oder 2, dadurch gekennzeichnet, daß mindestens eine der unterhalb der ersten Flüssigkeitsverteilleitung (4) angeordneten Flüssigkeitsverteilleitungen (4) unterhalb der Rieseleinbauelemente (3) angeordnet ist.

4. Zwangsbelüfteter Kühlturm nach mindestens einem der Ansprüche 1 bis 3, dadurch gekennzeichnet, daß die Flüssigkeitsverteilleitungen (4) mit Sprühdüsen (5) versehen sind.

5. Verfahren zum Betrieb eines zwangsbelüfteten Kühlturms nach mindestens einem der Ansprüche 1 bis 4, dadurch gekennzeichnet, daß die abzukühlende Flüssigkeit über mindestens eine zweite Flüssigkeitsverteilleitung (4) verteilt wird, die im Abstand zu der ersten Flüssigkeitsverteilleitung und unterhalb dieser Flüssigkeitsverteilleitung (4) angeordnet ist.

6. Verfahren nach Anspruch 5, dadurch gekennzeichnet, daß die Temperatur des wärmeaufnehmenden Mediums gemessen und in Abhängigkeit von dieser Temperatur die abzukühlende Flüssigkeit auf eine oder mehrere Flüssigkeitsverteilleitungen (4) verteilt wird.

7. Verfahren nach Anspruch 5 oder 6, dadurch gekennzeichnet, daß die Verteilung der abzukühlenden Flüssigkeit auf eine um so tiefer gelegene Flüssigkeitsverteilleitung (4) erfolgt, je tiefer die Temperatur des wärmeaufnehmenden Mediums ist.
